# EUROPEAN PATENT APPLICATION

(11) **EP 3 430 908 A1**
(43) Date of publication of application: **23.01.2019**
(21) Application number: 16894216.7
(22) Date of filing: 08.12.2016
(51) Int. Cl.: A23B 7/04, A23B 7/148

(54) **METHOD FOR PRESERVATION OF FRESH PLANTS BY VACUUM PRE-COOLING SYNCHRONOUSLY COMBINED WITH MODIFIED ATMOSPHERE TECHNIQUE**

(30) Priority: 17.03.2016 CN 201610157305
(71) Applicant: South China University Of Technology (SCUT), Guangzhou, Guangdong 510640 (CN)
(72) Inventor: SUN, Dawen, Guangzhou Guangdong 510640 (CN); WU, Xinwei, Guangzhou Guangdong 510640 (CN); ZHU, Zhiwei, Guangzhou Guangdong 510640 (CN)
(74) Representative: Ström & Gulliksson AB
(86) International application number: PCT/CN2016/109042
(87) International publication number: WO 2017/157057

(57) **Abstract**

The present invention belongs to the field of post-harvest preservation technique of fresh plants, and discloses a method for the preservation of fresh plants by vacuum pre-cooling synchronously combined with modified atmosphere technique. The method comprises the following steps: (1) screening field-picked fresh plants, and selecting individuals with uniform size, consistent maturity, and no obvious defects; (2) placing the screened individuals in a vacuum pre-cooler for pre-cooling; (3) after the plants being pre-cooled to the final temperature, the device automatically shuts down the refrigerator and vacuum pump, and the pre-configured mixed gas is introduced from the intake air inlet into the vacuum chamber for re-pressing; and (4) taking the re-pressed fresh plants out of the pre-cooler, and performing modified atmosphere packaging and refrigerating. The method proposes that a specific mixed gas is filled during the vacuum pre-cooling and re-pressure stages, and the re-pressure process after pre-cooling is closely integrated with the modified atmosphere technique to reduce the respiration metabolism of the plant to a suitable low level, significantly prolonging the shelf life of the product for more than 5 days.

## Description

### FIELD OF THE INVENTION

The present invention belongs to the field of post-harvest preservation technique of fresh plants, and in particular relates to a method for the preservation of fresh plants by vacuum pre-cooling synchronously combined with modified atmosphere technique.

### BACKGROUND OF THE INVENTION

The newly harvested fresh plants carry a lot of field heat, have strong respiration and active microbial reproduction, and are extremely perishable. Pre-cooling, as the primary link of cold chain preservation, can quickly remove field heat in the production area, reduce the temperature of vegetables, effectively inhibit respiration, and reduce the water evaporation, the consumption of nutrients and the amount of ethylene released. The low-temperature environment can also effectively inhibit a large number of activities of various microorganisms and reduce their damage to vegetable ingredients to prolong storage time.

Vacuum pre-cooling is an emerging effective pre-cooling technique in recent years. It has the advantages of rapid pre-cooling, uniform cooling, low energy consumption and low cost of equipment operation, and no limitation by packaging. It is especially suitable for products with high free-water content and structures that facilitate moisture dispersion. Vacuum pre-cooling technique has been widely used in many fields such as vegetables, edible fungi, flowers and other agricultural products as well as baked foods and cooked foods.

For fresh plants, stomata are distributed on the aerial epidermis of leaves and stems, and most plant leaves have an average of 10,000 to 30,000 stomata per square centimeter of epidermis. The leaf palisade tissue cells do not or rarely contact with each other, forming a well-developed interstitial system, which ensures full contact of each cell with gas and is beneficial to the exchange of large amounts of gas during photosynthesis. Located between the palisade tissue and the lower epidermis is a parenchyma with an irregular shape and containing a small amount of chloroplasts. The arrangement of cells is loose, and there is a large gap among the cells, especially in the inside of the stomata, forming a large substomatic chamber. Some parenchyma tissues have well-developed cell gaps. These gaps gradually connect with each other during development and finally form a net-like air cavity and airway. A large amount of air can accumulate in the air cavity and airway, which is conducive to cellular respiration and gas exchange in organs. In addition, the meaty part of the fruiting body of edible fungi is mostly composed of filamentous mycelia, lamellae and tubules also have a multi-gap structure, and prosthecae has different structures such as solid, soft and hollow structures due to different varieties.

Vegetables and edible fungi have a large amount of free water and a gap system in their organisms, making them suitable for the vacuum pre-cooling technique.

For example, the Chinese invention patent publication CN 104106623 A disclosed a vacuum pre-cooling preservation method for color peppers. According to this method, the picked fresh color peppers were put into a foam box and sent to a laboratory for screening and classification, and subjected to vacuum cooling treatment after being sprayed with pretreatment liquid; when the center temperature of the color peppers reached 10°C to 15°C, the refrigeration device and the vacuum pump were turned off; and the color peppers were enveloped and preserved after being re-pressed for 2 min. This method could effectively inhibit the metabolism of fruits and vegetables, including inhibition of the decline in sensory quality, the increase in weight loss rate and the decomposition of vitamin C and carotene, and could thus significantly extend the shelf life of color peppers.

The invention and research of this type only uses the vacuum pre-cooling technique to preserve a single variety of vegetables, having a small scope of use and limited preservation effect.

The modified atmosphere technique, usually based on refrigeration, changes the gas composition of the product storage environment by using the principle of CO₂ emission from the consumption of O₂ in the respiration of fresh vegetables, so as to delay the decline of the organism and extend the shelf life of the vegetable products.

The Chinese invention patent publication CN 104222263A disclosed a vacuum pre-cooling preservation process of pleurotus eryngii, which comprised the vacuum pre-cooling of pleurotus eryngii for 15-20 min at the pre-cooling temperature of 0.5°C to 3°C, and then the use of a packaging bag of the PE anti-fog film for modified atmosphere packaging.

The method included first vacuum pre-cooling and then modified atmosphere packaging preservation, so as to extend the storage time of pleurotus eryngii. Although it achieved certain results, it also had the following defects:
1) At the end of the vacuum pre-cooling, ordinary re-pressure was performed. Air was introduced into the vacuum chamber. A relatively high proportion of oxygen and carbon dioxide would rise with temperature, which would significantly increase the respiratory metabolism of the product. The pre-cooling effect would be thus greatly reduced.
2) The air introduced during the re-pressure process would enter interstitial spaces of the plants. The proportion of oxygen and carbon dioxide in the air was not suitable for the low-temperature fresh plants at the end of the pre-cooling at this time, and this would greatly prolong the time for the fresh plants to reach the appropriate respiration rate after the next modified atmosphere packaging.

However, most existing methods for vacuum pre-cooling of fresh plants have many limitations:
(1) Most of the research on the preservation methods disclosed in the existing patents focuses on the preservation of a single kind of vegetables and has a narrow range of application.
(2) The single use of vacuum pre-cooling technique or modified atmosphere preservation technique has limited preservation effect.
(3) Although some preservation methods use both vacuum pre-cooling and modified atmosphere preservation techniques, the combination thereof is two processes that are mechanically separated from each other, with the vacuum pre-cooling directly followed by the re-pressing. As air directly enters the gap among tissue cells and the content of oxygen in the environment is high, fresh plants have enhanced respiratory metabolism and poor preservation.

### CONTENTS OF THE INVENTION

In order to overcome the disadvantages and deficiencies of the prior art described above, the primary purpose of the present invention is to provide a method for the preservation of fresh plants by vacuum pre-cooling synchronously combined with modified atmosphere technique that is highly efficient and energy-saving and can be easily implemented in perishable fresh plants such as vegetables and edible fungi.

The purpose of the present invention is achieved through the following technical solution:
A method for the preservation of fresh plants by vacuum pre-cooling synchronously combined with modified atmosphere technique is provided, comprising the following specific steps:
(1) Screening the field-picked fresh plants, and selecting individuals with uniform size, consistent maturity, and no obvious defects;
(2) placing the screened individuals in a vacuum pre-cooler for pre-cooling;
(3) after the plants being pre-cooled to the final temperature, the device automatically shuts down the refrigerator and vacuum pump, and the pre-configured mixed gas is introduced from the intake air inlet into the vacuum chamber for re-pressing; and
(4) taking the re-pressed fresh plants out of the pre-cooler, and performing modified atmosphere packaging and refrigerating.

The fresh plants described in the step (1) refer to vegetables or edible fungi.

Preferably, the vegetables described in the step (1) are Chinese cabbage, Chinese kale, lettuce, green pepper or broccoli.

Preferably, the edible fungi described in the step (1) are shiitake, straw mushroom or boletus of steppes.

The pre-cooling in the step (2) refers to pre-cooling for 8-30 min to a temperature of 1°C to 15°C.

Preferably, when the fresh plants described in the step (1) are edible fungi, the pre-cooling described in the step (2) refers to pre-cooling for 10-20 min to a final temperature of 1°C to 5°C.

The pre-configured mixed gas described in the step (3) refers to a mixed gas composed of O₂, CO₂ and N₂; with reference to the tolerance range of oxygen and carbon dioxide of different fresh plants, the proportion of O₂, CO₂ and N₂ in the mixed gas is not the same. When the fresh plants described in the step (1) are vegetables, the proportion of the pre-configured mixed gas described in the step (3) is preferably O₂ 3% to 5%, CO₂ 3% to 7%, and N₂ for the balance; when the fresh plants described in the step (1) are edible fungi, the proportion of the pre-configured mixed gas described in the step (3) is preferably O₂ 1% to 2%, CO₂ 10% to 20%, and N₂ for the balance.

The re-pressing described in the step (3) refers to re-pressing for 1-3 min.

Preferably, the re-pressing described in the step (3) refers to re-pressing for 2 min.

The gas filled in the modified atmosphere described in the step (4) is a mixed gas composed of O₂, CO₂ and N₂; with reference to the tolerance range of oxygen and carbon dioxide of different fresh plants, the proportion of O₂, CO₂ and N₂ in the mixed gas is not the same. The proportion of the gas filled in the modified atmosphere may be the same with or different from that of the pre-configured mixed gas described in the step (3). When the fresh plants described in the step (1) are vegetables, the proportion of the gas filled in the modified atmosphere described in the step (4) is preferably O₂ 3% to 5%, CO₂ 3% to 7%, and N₂ for the balance; when the fresh plants described in the step (1) are edible fungi, the proportion of the gas filled in the modified atmosphere described in the step (4) is preferably O₂ 1% to 2%, CO₂ 10% to 20%, and N₂ for the balance.

The refrigerating described in the step (4) refers to refrigerating at 1°C to 12°C.

Preferably, when the selected fresh plants are edible fungi, the refrigerating described in the step (4) preferably refers to refrigerating at 2°C to 4°C.

A device for the above preparation method includes a vacuum chamber 1, a sample basket 2, an operation screen 3, a temperature sensor 4, a re-pressure intake air inlet 5, a mixed gas configurer 6, and a gas storage device 7.

The re-pressure intake air inlet 5 is connected to the vacuum chamber 1. After the pre-cooling final temperature is reached, the gas in the gas storage device 7 goes through the mixed gas configurer 6 to obtain the pre-configured mixed gas, which enters the vacuum chamber 1 from the re-pressure intake air inlet 5. The sample basket 2 is placed in the middle of the vacuum chamber 1. The temperature sensor 4 includes 8 probes, which are evenly distributed and connected above the vacuum chamber for detecting the temperature of the vegetables at different positions.

The vacuum chamber 1 is a chamber in which the product is pre-cooled, and has a specific size of 40 cm × 30 cm × 40 cm, allowing processing a sample of 5 kg in one batch.

The sample basket 2 is a basket where products are placed when pre-cooled, and is made of plastic, convenient for taking and placing samples.

The operation screen 3 can be used to set pre-cooling parameters such as pre-cooling time, pre-cooling final temperature, and the like.

In order to avoid local cold injury, there are eight temperature sensors 4 used to detect the temperature of vegetables in different locations, with the pre-cooling final temperature determined by the lowest temperature displayed by the eight sensors.

The mechanism of the present invention is as follows:
According to the fact that there is not only a large amount of free water but also a large amount of free gas in plant tissues or intercellular spaces, it is proposed to use proper vacuum techniques to promote the water evaporation and gas discharge, and then fill a certain amount of specific mixed preservative gas. That is, after the pre-cooling temperature is reached, a certain proportion of pre-configured gas is introduced in the re-pressing process, and the re-pressure process after pre-cooling is closely integrated with the modified atmosphere technique. After the pre-cooling temperature is reached, re-pressure and introduction of a specific proportion of mixed gases suitable for the respiratory metabolism of this category of plants are performed. These gases are inhaled into the vacuum chamber, and enter the intercellular spaces to form a protective gas layer on the surface of the fresh plants, changing the gas composition of the plants' environment deeply into the intercellular space, immediately establishing the desired modified atmosphere environment, and bringing the plants' respiratory metabolism to a suitable low level. Subsequently modified atmosphere packaging is performed, which only needs a suitable low temperature to achieve a good preservation effect.

Compared with the prior art, the present invention has the following advantages and beneficial effects:
(1) The method of the present invention, based on totally different theoretical considerations and technical ideas, proposes that a certain mixed gas is filled during the vacuum pre-cooling and re-pressure stages, and enters the intercellular space to form a protective gas layer on the surface of fresh plants, changing the gas composition of the plants' environment deeply into the intercellular space, immediately establishing the desired modified atmosphere environment, bringing the plants' respiratory metabolism to a suitable low level, and reducing the respiration rate of the fresh plants.
(2) The method of the present invention can be used for re-pressure using the mixed gas used in the modified atmosphere. The pressure in the vacuum pre-cooling chamber is low such that the gas is directly inhaled during the re-pressure, characterized by no additional power, low energy consumption and convenient operation.
(3) The method of the present invention is wider in application range than the method of keeping freshness for a single category of plants, and is applicable to various leafy vegetables and edible fungi.
(4) According to the method of the present invention, the shelf life of the leafy vegetables can reach about 35 days, which is further prolonged by more than 15 days compared to the products that are separately pre-cooled and refrigerated, and thus products with better preservation effect are obtained.

### BRIEF DESCRIPTION OF THE DRAWINGS

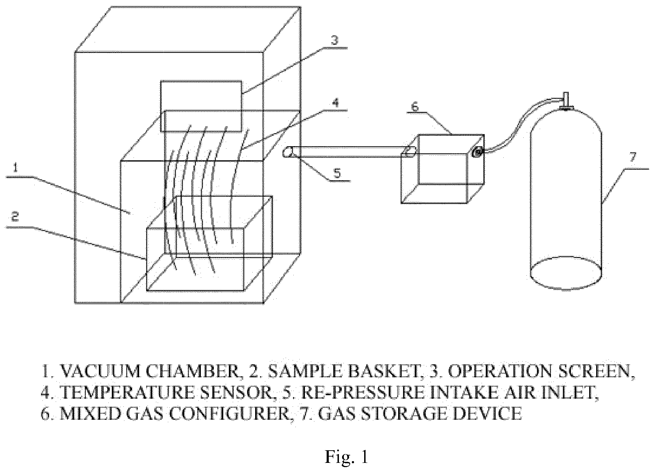

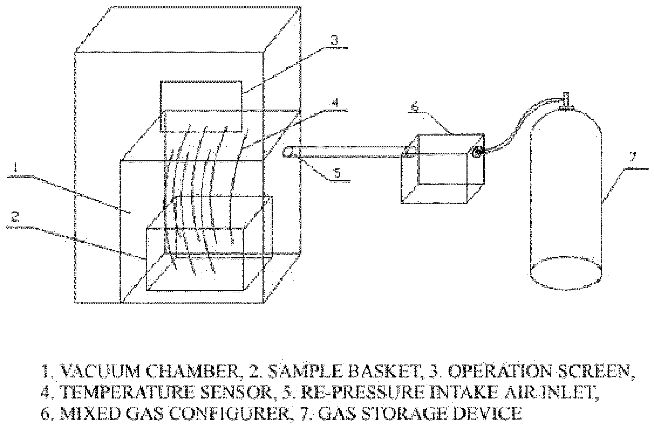

Fig. 1 is a schematic diagram of a vacuum pre-cooling device used in an example of the present invention.

### DETAILED DESCRIPTION OF THE EMBODIMENTS

The present invention will be further described in detail with reference to examples and drawings, but the embodiments of the present invention are not limited thereto.

### Example 1

Lettuce was selected that had uniform size, consistent maturity, and no obvious defects. Pre-cooling was performed within 3 hours after harvesting. The lettuce was stacked neatly in the sample basket and placed in a vacuum chamber of a pre-cooling vacuum machine (VC-1601 from Dongguan Kemeisi Refrigeration Equipment Co., Ltd.) to be pre-cooled. The operation screen was used to set the pre-cooling time to 8 min, the pre-cooling final temperature to 1°C, and the re-pressure time to 1 min. After the pre-cooling final temperature was reached, re-pressure was performed: the pre-configured mixed gas was introduced from the intake air inlet (Dansensor gas mixer, from Danish Dansensor, MAP Mix ProV 3-Gas), having a specific content proportion of O₂ 3%, CO₂ 4% and N₂ 93%. After 1 min of re-pressure, the lettuce was taken out for modified atmosphere packaging, with the gas introduced having a content proportion of O₂ 3%, CO₂ 4% and N₂ 93%. The product was refrigerated at 1°C after being packaged.

The control group used the lettuce of the same quality. Pre-cooling was performed within 3 hours after harvesting. The lettuce was stacked neatly in the sample basket and placed in the vacuum chamber of the pre-cooling vacuum machine (VC-1601 from Dongguan Kemeisi Refrigeration Equipment Co., Ltd.) to be pre-cooled. The operation screen was used to set the pre-cooling time to 8 min and the pre-cooling final temperature to 1°C. The re-pressure process after the pre-cooling final temperature was reached included conventionally filling air for the re-pressure time of 1 min. After the re-pressure, the lettuce was taken out of the vacuum chamber for modified atmosphere packaging. The proportion of the filled gas was O₂ 3%, CO₂ 4% and N₂ 93%. All the lettuce was packaged within 15 minutes after it was taken out and then refrigerated at 1°C.

The shelf life of the lettuce in the control group was 27 days, while the quality of the lettuce stored by this method was slowly declined such that the shelf life was 35 days. Compared with the existing advanced methods, the shelf life was extended by 8 days, and the preservation effect was good.

### Example 2

Green peppers were selected as raw materials that had consistent maturity, were clean, fresh and crisp, had no rot, odor, cold injury, frost damage or mechanical injury. Pre-cooling was performed within 3 hours after harvesting. The green peppers were stacked neatly in the sample basket and placed in the vacuum chamber of the pre-cooling vacuum machine (VC-1601 from Dongguan Kemeisi Refrigeration Equipment Co., Ltd.) to be pre-cooled. The operation screen was used to set the pre-cooling time to 30 min, the pre-cooling final temperature to 15°C, and the re-pressure time to 3 min. After the pre-cooling final temperature was reached, re-pressure was performed: the pre-configured mixed gas was introduced from the intake air inlet (Dansensor gas mixer, from Danish Dansensor, MAP Mix ProV 3-Gas), having a specific content proportion of O₂ 5%, CO₂ 3% and N₂ 92%. After 3 min of re-pressure, the green peppers were taken out for modified atmosphere packaging, with the gas introduced having a content proportion of O₂ 5%, CO₂ 3% and N₂ 92%. The green peppers were refrigerated at 12°C after being packaged.

The control group used the green peppers of the same quality. Pre-cooling was performed within 3 hours after harvesting. The green peppers were stacked neatly in the sample basket and placed in the vacuum chamber of the pre-cooling vacuum machine (VC-1601 from Dongguan Kemeisi Refrigeration Equipment Co., Ltd.) to be pre-cooled. The operation screen was used to set the pre-cooling time to 30 min and the pre-cooling final temperature to 15°C. The re-pressure process after the pre-cooling final temperature was reached included conventionally filling air for the re-pressure time of 3 min. After the re-pressure, the green peppers were taken out of the vacuum chamber for modified atmosphere packaging. The proportion of the filled gas was O₂ 5%, CO₂ 3% and N₂ 92%. The green peppers were refrigerated at 12°C after being packaged.

The shelf life of the green peppers in the control group was 22 days, while the quality of the green peppers treated by this preservation method was slowly declined such that the shelf life was 30 days. Compared with the existing preservation method, the shelf life was extended by 8 days, and the preservation effect was good.

### Example 3

Broccoli was selected that had consistent maturity, uniform size, uniform color, no obvious defects, no mechanical injury or blight, and was stacked neatly in the sample basket. The broccoli was pre-cooled within 3 hours after being harvested, and was placed in the vacuum chamber of the pre-cooling vacuum machine (VC-1601 from Dongguan Kemeisi Refrigeration Equipment Co., Ltd.) to be pre-cooled. The operation screen was used to set the pre-cooling time to 18 min, the pre-cooling final temperature to 5°C, and the re-pressure time to 2 min. After the pre-cooling final temperature was reached, re-pressure was performed: the pre-configured mixed gas was introduced from the intake air inlet (Dansensor gas mixer, from Danish Dansensor, MAP Mix ProV 3-Gas), having a specific content proportion of O₂ 3%, CO₂ 7% and N₂ 90%. After 2 min of re-pressure, the broccoli was taken out for modified atmosphere packaging, with the gas introduced having a content proportion of O₂ 4%, CO₂ 3% and N₂ 93%. The broccoli was refrigerated at 5°C after being packaged.

The control group used the broccoli of the same quality. Pre-cooling was performed within 3 hours after harvesting. The broccoli was stacked neatly in the sample basket and placed in the vacuum chamber of the pre-cooling vacuum machine (VC-1601 from Dongguan Kemeisi Refrigeration Equipment Co., Ltd.) to be pre-cooled. The operation screen was used to set the pre-cooling time to 18 min and the pre-cooling final temperature to 5°C. The re-pressure process after the pre-cooling final temperature was reached included conventionally filling air for the re-pressure time of 2 min. After the re-pressure, the broccoli was taken out of the vacuum chamber for modified atmosphere packaging. The proportion of the filled gas was O₂ 4%, CO₂ 3% and N₂ 93%. The broccoli was refrigerated at 5°C after being packaged.

The shelf life of the broccoli in the control group was 15 days, while the quality of the broccoli treated by this preservation method was slowly declined such that the shelf life was 20 days. Compared with the existing preservation method, the shelf life was extended by 5 days, and the preservation effect was good.

### Example 4

Shiitake was harvested, and fruiting bodies that were intact and had no obvious defects were selected, with inedible parts removed. Pre-cooling was performed within 3 hours after harvesting. The shiitake was stacked neatly in the sample basket and placed in the vacuum chamber of the pre-cooling vacuum machine (VC-1601 from Dongguan Kemeisi Refrigeration Equipment Co., Ltd.) to be pre-cooled. The operation screen was used to set the vacuum pre-cooling time to 10 min, the pre-cooling final temperature to 5°C and the re-pressure time to 2 min. After the pre-cooling final temperature was reached, re-pressure was performed: the pre-configured mixed gas was introduced (Dansensor gas mixer, from Danish Dansensor, MAP Mix ProV 3-Gas), having a specific content proportion of O₂ 1%, CO₂ 15% and N₂ 84%. After 2 min of re-pressure, the shiitake was taken out for modified atmosphere packaging, with the gas introduced having a content proportion of O₂ 1%, CO₂ 15% and N₂ 84%. The shiitake was stored at 2°C after being packaged.

The control group used shiitake of the same batch, and selected fruiting bodies that were intact and had no obvious defects, with inedible parts removed. Within 3 hours after being harvested, the shiitake was put into a 2°C cold store for pre-cooling and storage.

The shelf life of the control group was 10 days. The shiitake treated by this preservation method had a shelf life of 18 days, a water loss rate of 18%, and Vc content reduced by 55%. The shiitake treated by this preservation method had flexible pilei, normal color and mushroom odor. Compared with the control group, the shiitake treated by this preservation method was significantly extended in the shelf life by 8 days.

### Example 5

Boletus of steppes was harvested, and fruiting bodies that were intact and had no obvious defects were selected, with inedible parts removed. Pre-cooling was performed within 3 hours after harvesting. The boletus of steppes was stacked neatly in the sample basket and placed in the vacuum chamber of the pre-cooling vacuum machine (VC-1601 from Dongguan Kemeisi Refrigeration Equipment Co., Ltd.) to be pre-cooled. The operation screen was used to set the vacuum pre-cooling time to 20 min and the pre-cooling final temperature to 1°C. After the pre-cooling final temperature was reached, re-pressure was performed: the pre-configured mixed gas was introduced (Dansensor gas mixer, from Danish Dansensor, MAP Mix ProV 3-Gas), having a specific content proportion of O₂ 2%, CO₂ 15% and N₂ 83%. After 2 min of re-pressure, the boletus of steppes was taken out for modified atmosphere packaging, with the gas introduced having a content proportion of O₂ 2%, CO₂ 15% and N₂ 83%. The boletus of steppes was refrigerated at 4°C after being packaged.

The control group used boletus of steppes of the same batch, and fruiting bodies that were intact and had no obvious defects were selected, with inedible parts removed. Within 3 hours after being harvested, the boletus of steppes was put into a 4°C cold store for pre-cooling and storage.

The shelf life of the boletus of steppes in the control group was 32 days, while the quality of the boletus of steppes treated by this preservation method was slowly declined such that the shelf life was 45 days. Compared with the existing preservation method, the shelf life was extended by 13 days, and the preservation effect was good.

The above examples are preferred embodiments of the present invention, but the embodiments of the present invention are not limited by the foregoing embodiments, and any other alterations, modifications, substitutions, combinations, and simplifications made without departing from the spirit and principle of the present invention should all be equivalent replacement methods and included in the protection scope of the present invention.

## Claims

1. A method for preservation of fresh plants by vacuum pre-cooling synchronously combined with modified atmosphere technique, **characterized in that** the method comprises the following steps:
(1) screening field-picked fresh plants, and selecting individuals with uniform size, consistent maturity, and no obvious defects;
(2) placing the screened individuals in a vacuum pre-cooler for pre-cooling;
(3) after the plants being pre-cooled to the final temperature, the vacuum pre-cooler automatically shuts down a refrigerator and a vacuum pump, and pre-configured mixed gas is introduced from an intake air inlet into a vacuum chamber for re-pressing; and
(4) taking the re-pressed fresh plants out of the pre-cooler, and performing modified atmosphere packaging and refrigerating.

2. The method for preservation of fresh plants by vacuum pre-cooling synchronously combined with modified atmosphere technique according to claim 1, **characterized in that**:
the fresh plants described in the step (1) refer to vegetables or edible fungi.

3. The method for preservation of fresh plants by vacuum pre-cooling synchronously combined with modified atmosphere technique according to claim 2, **characterized in that**:
the vegetables described in the step (1) are Chinese cabbage, Chinese kale, lettuce, green pepper or broccoli; and
the edible fungi described in the step (1) are shiitake, straw mushroom or boletus of steppes.

4. The method for preservation of fresh plants by vacuum pre-cooling synchronously combined with modified atmosphere technique according to claim 1, **characterized in that**:
the pre-cooling in the step (2) refers to pre-cooling for 8-30 min to a temperature of 1°C to 15°C.

5. The method for preservation of fresh plants by vacuum pre-cooling synchronously combined with modified atmosphere technique according to claim 2, **characterized in that**:
the pre-configured mixed gas described in the step (3) refers to a mixed gas composed of O₂, CO₂ and N₂; when the fresh plants described in the step (1) are vegetables, the proportion of the gas filled in the modified atmosphere described in the step (3) is O₂ 3% to 5%, CO₂ 3% to 7%, and N₂ for the balance; when the fresh plants described in the step (1) are edible fungi, the proportion of the gas filled in the modified atmosphere described in the step (3) is O₂ 1% to 2%, CO₂ 10% to 20%, and N₂ for the balance.

6. The method for preservation of fresh plants by vacuum pre-cooling synchronously combined with modified atmosphere technique according to claim 1, **characterized in that**:
the re-pressing described in the step (3) refers to re-pressing for 1-3 min.

7. The method for preservation of fresh plants by vacuum pre-cooling synchronously combined with modified atmosphere technique according to claim 2, **characterized in that**:
the gas filled in the modified atmosphere described in the step (4) is a mixed gas composed of O₂, CO₂ and N₂; when the fresh plants described in the step (1) are vegetables, the proportion of the gas filled in the modified atmosphere described in the step (4) is O₂ 3% to 5%, CO₂ 3% to 7%, and N₂ for the balance; when the fresh plants described in the step (1) are edible fungi, the proportion of the gas filled in the modified atmosphere described in the step (3) is O₂ 1% to 2%, CO₂ 10% to 20%, and N₂ for the balance.

8. The method for preservation of fresh plants by vacuum pre-cooling synchronously combined with modified atmosphere technique according to claim 1, **characterized in that**: the refrigerating described in the step (4) refers to refrigerating at 1°C to 12°C.

9. The method for preservation of fresh plants by vacuum pre-cooling synchronously combined with modified atmosphere technique according to claim 2, **characterized in that**:
when the fresh plants described in the step (1) are edible fungi, the pre-cooling described in the step (2) refers to pre-cooling for 10-20 min to a final temperature of 1°C to 5°C, and the refrigerating described in the step (4) refers to refrigerating at 2°C to 4°C.
